# EUROPÄISCHE PATENTANMELDUNG

(11) **EP 4 464 913 A1**
(43) Veröffentlichungstag der Anmeldung: **20.11.2024**
(21) Anmeldenummer: 24183181.7
(22) Anmeldetag: 03.07.2017
(51) Int. Cl.: F16F 9/04

(54) **VERFAHREN ZUM HERSTELLEN EINES DRUCKBEHÄLTERS SOWIE DERARTIGER DRUCKBEHÄLTER**

(30) Priorität: 05.07.2016 DE 102016112307
(62) Teilanmeldung aus: 17179299.7
(71) Anmelder: PWO AG, 77704 Oberkirch (DE)
(72) Erfinder: OBERT, Daniel, 77790 Steinach (DE); MAYER, Gerhard, 77704 Oberkirch (DE); SUCHER, Nico, 77855 Achern (DE); SIEFERMANN, Horst, 77855 Achern-Wagshurst (DE)
(74) Vertreter: Witte, Weller & Partner Patentanwälte mbB

(57) **Zusammenfassung**

Ein Verfahren zum Herstellen eines Druckbehälters (10 für ein Kraftfahrzeug weist die Schritte auf: Bereitstellen eines hohlen Grundkörpers (12) als Vorstufe des Druckbehälters (10), wobei der Grundkörper (12) ein Anfangsinnenvolumen aufweist, und wobei der Grundkörper (12) eine Wandung (24) aufweist, die sich vollumfänglich um eine Längsachse (16) des Grundkörpers (12) erstreckt, wobei die Wandung (24) eine Öffnung (30) aufweist, die einen Öffnungsrand (32) aufweist; Bereitstellen eines hohlen Zusatzkörpers (14), der eine Basiswand (26) und eine Umfangswand (28) aufweist, wobei die Umfangswand (28) an einer der Basiswand (26) gegenüber liegenden Seite (34) offen ist; Fügen des Zusatzkörpers (14) mit dem Grundkörper (12) an der Öffnung (30) der Wandung (24) des Grundkörpers (12) derart, dass der Druckbehälter (10) mit einem gewünschten Endinnenvolumen erhalten wird, das größer oder kleiner ist als das Anfangsinnenvolumen des Grundkörpers (12). Des Weiteren wird ein solcher Druckbehälter als Luftfedertopf einer Federung beschrieben. (Fig. 3)

## Beschreibung

Die Erfindung betrifft ein Verfahren zum Herstellen eines Druckbehälters für ein Kraftfahrzeug gemäß dem Oberbegriff des Anspruchs 1.

Die Erfindung betrifft ferner einen derartigen Druckbehälter gemäß dem Oberbegriff des Anspruchs 10.

Ein Druckbehälter gemäß der vorliegenden Erfindung kann insbesondere ein Luftfedertopf einer Luftfederung eines Kraftfahrzeuges sein. Ein Luftfedertopf eines Kraftfahrzeugs übernimmt neben der Übertragung der anfallenden Kräfte aus dem Federbein auch die Funktion eines Druckbehälters. Neben weiteren Bauteilen stellt der Luftfedertopf das für die Federrate notwendige Luftvolumen bereit. In der folgenden Beschreibung ist unter einem Druckbehälter insbesondere ein Luftfedertopf zu verstehen.

Wenn ein neues Kraftfahrzeugmodell entwickelt wird, kann das notwendige endgültige Innenvolumen des Druckbehälters erst zu einem fortgeschrittenen Projektstand auf Basis von Fahrzeugfahrversuchen definiert werden. Deshalb wird zu Projektbeginn, meist auf Vorgaben des Herstellers des Kraftfahrzeuges oder dessen Lieferanten des übergeordneten Systems, hier des Federungssystems, der Druckbehälter zunächst auf ein definiertes Innenvolumen ausgelegt. Anhand dieser Definition startet die Herstellung der notwendigen Umformwerkzeuge, der Vorrichtungsbau, d.h. die erforderlichen Betriebsmittel, sowie bei Bedarf die Anlagenbeschaffung für die Herstellung des Druckbehälters.

Da das im Rahmen der Fahrversuche ermittelte Soll-Innenvolumen des Druckbehälters häufig von dem zu Beginn definierten Innenvolumen abweicht, entstehen meist hohe Änderungsaufwendungen bei den Betriebsmitteln und eventuell bei der Fertigungsanlage, was zu hohen Kosten führt. Des Weiteren werden dadurch Projektendtermine gefährdet oder müssen verschoben werden, wodurch weitere Kosten entstehen können.

Es kann auch, beispielsweise bedingt durch den verfügbaren Bauraum im Kraftfahrzeug, ein Zusatzluftvolumen notwendig werden, das in Form eines zusätzlichen Bauteils bereitgestellt wird, das meist separat über einen Flansch an das Federbein geschraubt wird. Hierdurch entstehen nachteiligerweise Kosten durch die Herstellung und Montage dieses Bauteils.

In manchen Fällen ist zur Erreichung des ermittelten Soll-Innenvolumens des Druckbehälters kein Zusatzvolumen als separates Bauteil, jedoch ein asymmetrischer Aufbau des Druckbehälters notwendig. Dies bedingt, dass der Druckbehälter oft nicht mehr einteilig, sondern mehrteilig mit schwieriger herzustellenden Einzelteilen aufgebaut werden muss. Dies bringt Risiken bei der Dichtigkeit des Druckbehälters sowie höhere Kosten mit sich. Weiter verkomplizieren sich die Zusammenbau-Prozesse durch den mehrteiligen Aufbau, was sich zusätzlich negativ auf die Kostensituation auswirkt.
Da das Innenvolumen des Druckbehälters wie zuvor beschrieben meist nur mit hohem Aufwand veränderlich ist, ist die fahrzeugübergreifende Verwendung desselben Druckbehälters in vielen Fällen schwierig. WO 2015/082699 A1 offenbart einen Druckbehälter gemäß dem Oberbegriff des Anspruchs 10 sowie ein Verfahren zum Herstellen desselben gemäß dem Oberbegriff des Anspruchs 1. Der Druckbehälter ist ein Abrollkolben für einen Luftfederdämpfer für Kraftfahrzeuge, mit einem Kolbenabschnitt und einem Behälterabschnitt, die jeweils hohl sind und in fluid-leitender Weise miteinander verbunden sind. Weiterhin weist der Abrollkolben ein Deckelelement auf, wobei das Deckelelement mit dem Behälterabschnitt verbunden ist, um einen Zusatzvolumenbehälter zu bilden.

DE 10 2014 212 788 A1 offenbart einen Luftausgleichsbehälter eines Fahrzeugs, der mit Anbindungsstellen versehen ist, die in einer ersten Ebene des Behälters liegen und zur Anbindung an eine Struktur des Fahrzeugs ausgebildet sind, wobei der Behälter als tragendes Bauteil ausgebildet ist, und in einer von der ersten Ebene beabstandeten zweiten Ebene weitere Anbindungsstellen aufweist, die zur Anbindung an die Struktur des Fahrzeugs ausgebildet sind. Der Behälter ist aus einer oberen Halbschale und einer unteren Halbschale zusammengesetzt, die teleskopartig ineinandergreifen.

Der Erfindung liegt daher die Aufgabe zugrunde, ein Verfahren zum Herstellen eines Druckbehälters für ein Kraftfahrzeug anzugeben, mit dem es möglich ist, einen Druckbehälter, insbesondere einen Luftfedertopf, auch dann kostengünstig herstellen zu können, wenn das aufgrund von Fahrzeugfahrversuchen ermittelte Soll-Innenvolumen des Druckbehälters von den Vorgaben zu Beginn eines Projektes abweicht.

Der Erfindung liegt des Weiteren die Aufgabe zugrunde, einen Druckbehälter bereitzustellen, der kostengünstig herstellbar ist.

Erfindungsgemäß wird die der Erfindung zugrundeliegende Aufgabe durch ein Verfahren zum Herstellen eines Druckbehälters für ein Kraftfahrzeug gemäß Anspruch 1 gelöst.

Gemäß dem erfindungsgemäßen Verfahren wird somit der Druckbehälter aus einem Grundkörper und einem Zusatzkörper aufgebaut, wobei der Zusatzkörper an den Grundkörper gefügt wird. Die Wandung des Grundkörpers weist hierzu eine Öffnung auf, im Bereich derer der Zusatzkörper mit dem Grundkörper gefügt wird. Der Zusatzkörper kann dabei ein Zusatzvolumen bereitstellen, indem der Innenraum des hohlen Zusatzkörpers mit dem Innenraum des Grundkörpers über die Öffnung kommuniziert, oder der Zusatzkörper kann das Innenvolumen des Grundkörpers verkleinern, indem der Zusatzkörper in die Öffnung greift, ohne dass der Hohlraum des Zusatzkörpers mit dem Innenraum des Grundkörpers kommuniziert.

Erfindungsgemäß wird der Grundkörper mit einer Mehrzahl von verteilt angeordneten Öffnungen in der Wandung bereitgestellt, wobei eine Mehrzahl von Zusatzkörpern bereitgestellt werden, die zum Erhalten des Druckbehälters mit dem gewünschten Endinnenvolumen an den Öffnungen mit dem Grundkörper gefügt werden.

Diese Maßnahme ist insbesondere dann von Vorteil, wenn der zur Verfügung stehende Bauraum für den Druckbehälter im Fahrzeug um den Druckbehälter herum eingeschränkt ist, wobei mit der vorstehend genannten Ausgestaltung ein Zusatzvolumen auf mehrere Zusatzkörper verteilt werden kann, die dann vom Grundkörper in radialer Richtung weniger weit abstehen, als wenn das gleiche Zusatzvolumen nur durch einen einzelnen Zusatzkörper bereitgestellt werden muss. Diese Ausgestaltung hat somit den Vorteil, dass sie besonders platzsparend ist.

Das erfindungsgemäße Verfahren ermöglicht es, bei minimalem Änderungsaufwand eine maximale Innenvolumenvarianz des Druckbehälters zu realisieren, ohne dass hierzu ein zusätzliches Bauteil oder ein asymmetrischer mehrteiliger Aufbau des Druckbehälters notwendig ist. Die Innenvolumenvarianz kann dabei bis zu +-50% oder mehr betragen.

Insbesondere sind kostenaufwendige Änderungen am Grundkörper in den verschiedenen Entwicklungsstufen zwischen Projektbeginn und Enddesign des Druckbehälters nicht erforderlich, mit Ausnahme des Vorsehens der zumindest einen Öffnung in der Wandung des Grundkörpers. Das Zusatz- oder Mindervolumen wird durch den Zusatzkörper erreicht, so dass der Druckbehälter mit dem gewünschten Endinnenvolumen, d.h. dem Soll-Innenvolumen gefertigt werden kann.

Die Form des Zusatzkörpers kann beliebig sein, wobei vorzugsweise eine solche Form gewählt wird, die tiefziehfähig ist. Es können auch mehrere Zusatzkörper mit unterschiedlichen Größen und/oder Formen bereitgestellt werden, die unterschiedliche Mehr- oder Mindervolumina bereitstellen.

Eine mögliche Form des hohlen Zusatzkörpers ist eine prismatische, insbesondere Quaderform, bei der eine Seite des Quaders offen ist. Andere Formen als Quaderformen sind jedoch ebenso möglich.

Mit dem erfindungsgemäßen Verfahren ist es außerdem möglich, Druckbehälter mit geringem Änderungsaufwand Fahrzeugmodell übergreifend herzustellen, weil nur der oder die Zusatzkörper entsprechend angepasst oder relativ zum Grundkörper unterschiedlich positioniert werden müssen, während der Grundkörper für mehrere Fahrzeugmodelle ohne Änderung nutzbar ist. Es können durch die Erfindung außerdem aufwendige zusätzliche Bauteile oder ein asymmetrischer mehrteiliger Aufbau des Druckbehälters vermieden werden.

Das Fügen des Zusatzkörpers mit dem Grundkörper hat nicht nur eine verbindende, sondern auch eine dichtende Funktion, so dass die Öffnung der Wandung des Grundkörpers nach dem Fügen des Zusatzkörpers dicht, insbesondere gasdicht, insbesondere druckfest abgedichtet ist.

In einer bevorzugten Ausgestaltung wird der Zusatzkörper so bereitgestellt, dass eine Kontur und Abmessung der Umfangswand des Zusatzkörpers zumindest annähernd an eine Kontur und Abmessung des Öffnungsrandes der Öffnung der Wandung des Grundkörpers angepasst ist.

Durch diese Ausgestaltung ergeben sich mehrere Vorteile, die sich teilweise in den nachfolgenden weiteren bevorzugten Ausgestaltungen des Verfahrens manifestieren.

Unabhängig von den nachstehend zu beschreibenden weiteren bevorzugten Ausgestaltungen hat die vorstehend genannte Maßnahme den Vorteil, dass der Zusatzkörper den Lackierprozess so gut wie nicht beeinflusst. Da der fertige Druckbehälter nach seiner Fertigung auch innenseitig lackiert wird, wozu der Lack in den Hohlraum des Druckbehälters gegossen oder gespritzt wird, entstehen durch die aneinander angepassten Konturen und Abmessungen der Umfangswand des Zusatzkörpers und des Öffnungsrandes der Öffnung keine Nischen, in denen sich Lack sammeln kann, der dann am Abfließen aus dem Druckbehälter gehindert wird.

In einer weiteren bevorzugten Ausgestaltung, die insbesondere in Kombination mit der zuvor genannten Ausgestaltung bevorzugt ist, wird der Zusatzkörper vor dem Fügen mit seiner offenen Seite voran teilweise in die Öffnung eingeschoben, so dass das gewünschte Endinnenvolumen des Druckbehälters erhalten wird.

Diese Ausgestaltung des Verfahrens ist besonders vorteilhaft hinsichtlich des Kostenaufwandes. Es ist nämlich in dieser Ausgestaltung ausreichend, für jedes gewünschte Endinnenvolumen des topfförmigen Druckbehälters Zusatzkörper in ein und derselben Form und Größe bereitzustellen. Unterschiedliche Endinnenvolumina des Druckbehälters können durch unterschiedlich weites Einschieben bzw. Einstecken des Zusatzkörpers in die Öffnung in der Wandung des Grundkörpers erzielt werden. Je weiter der Zusatzkörper in die Öffnung eingeschoben wird, desto kleiner ist das bereitgestellte Zusatzvolumen. In dieser Ausgestaltung wird somit eine Variabilität des Druckbehälter-Innenvolumens mit einem Minimum an Teilen erreicht.

In einer weiteren bevorzugten Ausgestaltung wird der Zusatzkörper vor dem Fügen mit der Basiswand voran zumindest teilweise in die Öffnung eingeschoben, so dass das gewünschte Endinnenvolumen des Druckbehälters erhalten wird.

In dieser Ausgestaltung kann das Anfangsinnenvolumen des Grundkörpers verringert werden, so dass der Druckbehälter ein Endinnenvolumen aufweist, das kleiner ist als das Anfangsinnenvolumen des Grundkörpers. Der Vorteil hierbei ist wiederum, dass die Verminderung des Innenvolumens des Druckbehälters variabel eingestellt werden kann. Ein weiterer Vorteil besteht darin, dass für die Verminderung des Innenvolumens des Druckbehälters sogar ein Zusatzkörper gleicher Form und Größe verwendet werden kann wie für die Vergrößerung des Innenvolumens. Der Unterschied besteht lediglich darin, dass der Zusatzkörper einmal mit der offenen Seite voran in den Grundkörper eingeschoben wird, und im andern Fall mit der geschlossenen Seite. Durch diese Ausgestaltung können außerdem mehrere Fahrzeugvarianten, die unterschiedliche Innenvolumina der Druckbehälter erfordern, mit denselben Grundwerkzeugsätzen und Zusatzkörpern bedient werden (sogenanntes Family Concept).

Insgesamt entsteht somit eine maximale Innenvolumenvariabilität des Druckbehälters mit einem Minimum an Teilen.

Im Zusammenhang mit den beiden zuvor genannten bevorzugten Ausgestaltungen ist in einer weiteren bevorzugten Ausgestaltung vorgesehen, dass das Fügen des Zusatzkörpers ein Fügen der Umfangswand des Zusatzkörpers mit dem Öffnungsrand der Öffnung der Wandung aufweist.

Im Falle der Ausgestaltung des Verfahrens, bei dem der Zusatzkörper in die Öffnung des Grundkörpers mit variabler Einstecktiefe eingeschoben werden kann, hat diese Maßnahme den Vorteil, dass das Fügen des Zusatzkörpers von außen her erfolgen kann und von der Einstecktiefe des Zusatzkörpers unabhängig ist. Damit sind keine Umbauten der Fügeanlage erforderlich, um Druckbehälter mit verschiedenen Innenvolumina herzustellen. Im Zusammenhang mit einer der zuvor genannten Ausgestaltungen, wonach die Kontur und Abmessung der Umfangswand des Zusatzkörpers zumindest annähernd an die Kontur und Abmessung des Öffnungsrands der Öffnung der Wandung des Grundkörpers angepasst ist, wird eine hohe Dichtigkeit aufgrund eines Formschlusses der Umfangswand des Zusatzkörpers mit dem Öffnungsrand der Öffnung der Wandung des Grundkörpers erreicht.

Alternativ zu der Ausgestaltung eines einsteckbaren Zusatzkörpers ist in einer weiteren bevorzugten Ausgestaltung vorgesehen, dass der Zusatzkörper an seiner offenen Seite einen Rand aufweist, der Zusatzkörper vor dem Fügen mit dem Rand um die Öffnung der Wandung des Grundkörpers an diesen angesetzt wird und der Rand der offenen Seite des Zusatzkörpers mit der Wandung oder dem Öffnungsrand der Öffnung gefügt wird.

Der Vorteil dieser Maßnahme besteht darin, dass der Zusatzkörper im gefügten Zustand nur an der Außenseite des Grundkörpers vorhanden ist, und somit kein Teil des Zusatzkörpers in den Druckbehälter hineinragt, wie dies bei der steckbaren Variante des Zusatzkörpers der Fall ist. Die vorstehend genannte Maßnahme hat den Vorteil, dass sie den Lackier- und auch den Fügeprozess noch weniger beeinflusst, bzw. diese beiden Prozesse vereinfacht.

Um im Rahmen der vorstehend genannten Ausgestaltung eine hohe Endinnenvolumenvarianz des Druckbehälters zu erhalten, wird der Zusatzkörper gemäß einer weiteren bevorzugten Ausgestaltung mit einem vorbestimmten Innenvolumen des Zusatzkörpers bereitgestellt, das so bemessen ist, dass nach dem Fügen des Zusatzkörpers der Druckbehälter mit dem gewünschten Endinnenvolumen erhalten wird, wobei das Bereitstellen des Zusatzkörpers mit dem vorbestimmten Innenvolumen ein Kürzen des Zusatzkörpers aufweisen kann.

Als Fügeverfahren können bei dem erfindungsgemäßen Verfahren zum Fügen des Zusatzkörpers am Grundkörper alle gängigen Fügeverfahren zum Einsatz kommen, insbesondere Schweißen, Kleben, Verpressen und/oder Löten.

In einer weiteren bevorzugten Ausgestaltung des Verfahrens wird der Zusatzkörper als Tiefziehteil bereitgestellt.

Der Vorteil dieser Ausgestaltung besteht in einer weiteren Kostenreduktion bei der Herstellung des Druckbehälters. Ebenso kann auch der Grundkörper als einteiliges Tiefziehteil gefertigt oder aus mehreren Tiefziehteilen zusammengesetzt sein.

Das hier beschriebene erfindungsgemäße Verfahren zum Herstellen eines Druckbehälters lässt sich sowohl anwenden, wenn der Grundkörper einteilig ist, als auch bei mehrteiligen Grundkörpern. Im letzteren Fall kann die Öffnung in der Wandung des Grundkörpers teileübergreifend in die Wandung des Grundkörpers eingebracht werden oder sein. Beispielsweise kann ein Teil der Öffnung an einem ersten Grundkörperteil ausgebildet sein, und der übrige Teil der Öffnung am anderen Grundkörperteil, so dass der Öffnungsrand wie im Fall eines einteiligen Grundkörpers sich vorzugsweise entlang einer in sich geschlossenen Linie erstreckt.

Erfindungsgemäß wird auch ein Druckbehälter für ein Kraftfahrzeug gemäß Anspruch 10 bereitgestellt.

Die im Zusammenhang mit der Darstellung des erfindungsgemäßen Verfahrens genannten Vorteile gelten auch für den erfindungsgemäßen Druckbehälter und die nachfolgend genannten bevorzugten Ausgestaltungen des Druckbehälters.

Vorzugsweise ist eine Kontur und Abmessung der Umfangswand des Zusatzkörpers zumindest annähernd an eine Kontur und Abmessung des Öffnungsrandes der Öffnung der Wandung des Grundkörpers angepasst.

Weiter vorzugsweise ist der Zusatzkörper mit der offenen Seite voran teilweise in die Öffnung der Wandung des Grundkörpers eingeschoben, insbesondere formschlüssig eingesteckt.

Alternativ hierzu ist der Zusatzkörper mit der Basiswand voran zumindest teilweise in die Öffnung eingeschoben, insbesondere formschlüssig eingesteckt.

Weiter vorzugsweise weist der Zusatzkörper an seiner offenen Seite einen Rand auf, und der Zusatzkörper ist mit dem Rand um die Öffnung der Wandung des Grundkörpers an diesen angesetzt, und der Rand der offenen Seite des Zusatzkörpers ist mit der Wandung oder dem Öffnungsrand der Öffnung gefügt.

Erfindungsgemäß weist der Grundkörper eine Mehrzahl von verteilt angeordneten Öffnungen in der Wandung auf, wobei eine Mehrzahl von Zusatzkörpern an den Öffnungen der Wandung mit dem Grundkörper gefügt sind.

Weiter vorzugsweise ist der Druckbehälter ein topfförmiger Druckbehälter mit einem topfförmigen Grundkörper. Weiter vorzugsweise ist der Druckbehälter ein Luftfedertopf einer Luftfederung für ein Kraftfahrzeug.

Weitere Vorteile und Merkmale ergeben sich aus der nachfolgenden Beschreibung und der beigefügten Zeichnung.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden mit Bezug auf diese nachfolgend näher beschrieben. Es zeigen:
- Fig. 1: einen Grundkörper als Vorstufe eines herzustellenden Druckbehälters für ein Kraftfahrzeug in perspektivischer Darstellung;
- Fig. 2: einen Zusatzkörper zur Verbindung mit dem Grundkörper in Fig. 1 zur Herstellung des Druckbehälters;
- Fig. 3: einen aus dem Grundkörper in Fig. 1 und Zusatzkörper in Fig. 2 hergestellten Druckbehälter gemäß einer ersten Ausführungsform;
- Fig. 4: einen aus dem Grundkörper in Fig. 1 und dem Zusatzkörper in Fig. 2 hergestellten Druckbehälter gemäß einer weiteren Ausführungsform;
- Fig. 5: einen aus dem Grundkörper in Fig. 1 und dem Zusatzkörper in Fig. 2 hergestellten Druckbehälter gemäß einer noch weiteren Ausführungsvariante;
- Fig. 6: eine gegenüber dem Druckbehälter in Fig. 3 abgewandelte Ausführungsform eines Druckbehälters;
- Fig. 7: eine gegenüber dem Druckbehälter in Fig. 6 abgewandelte Ausführungsform; und
- Fig. 8: einen Druckbehälter gemäß einer noch weiteren Ausführungsform.

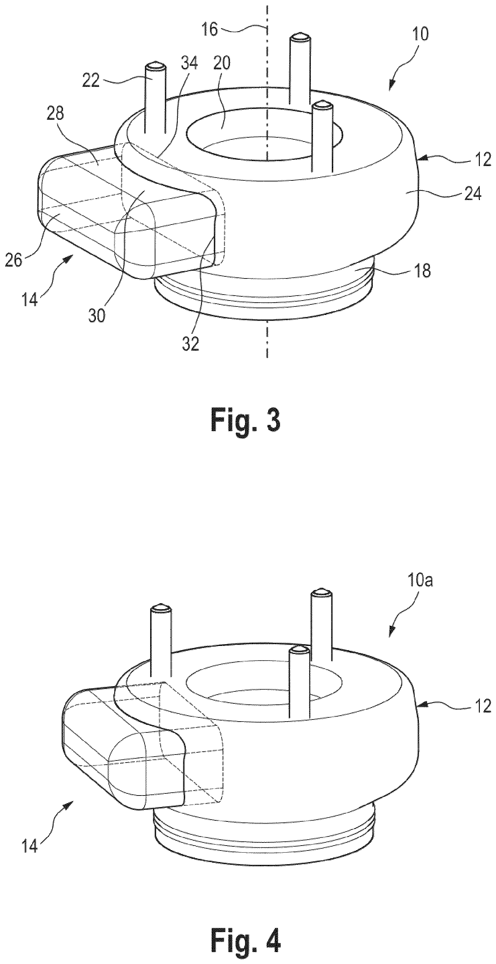

Fig. 3 zeigt einen mit dem allgemeinen Bezugszeichen 10 versehenen topfförmigen Druckbehälter. Der Druckbehälter 10 ist insbesondere ein Luftfedertopf für eine Luftfederung für ein Kraftfahrzeug.

Der Druckbehälter 10 weist einen Grundkörper 12 auf, der topfförmig ist, sowie einen Zusatzkörper 14, der mit dem Grundkörper 12 gefügt ist, wie noch beschrieben werden wird.

Der Grundkörper 12 ist im Ausführungsbeispiel der Fig. 3 ein einteiliger, insbesondere ein zumindest teilweise durch Tiefziehen hergestellter Topf. Der Grundkörper 12 weist eine Längsachse 16 auf. Der Grundkörper 12 ist bezüglich der Längsachse 16 im vorliegenden Ausführungsbeispiel rotationssymmetrisch, wobei der Grundkörper 12 in anderen Ausführungsbeispielen jedoch auch nicht rotationssymmetrisch bezüglich der Längsachse 16 sein kann.

Der Grundkörper 12 weist einen Flansch 18 auf, der dem Anbau beispielsweise eines nicht dargestellten Balges dienen kann. Auf seiner dem Flansch 18 gegenüberliegenden Seite weist der Grundkörper 12 eine Öffnung auf, die dem Einbau weiterer Teile der Luftfederung, wie beispielsweise einem Dämpfer dient. Der Grundkörper 12 und damit der Druckbehälter 10 können über in Fig. 3 beispielhaft dargestellte Befestigungsmittel 22 an einer Fahrzeugkarosserie, üblicherweise einem Dom festgelegt werden.

Der Grundkörper 12 weist eine sich vollumfänglich um die Längsachse 16 erstreckende Wandung 24 auf, die als sich vollumfänglich um die Längsachse 16 erstreckende Wandung die Seitenwandung des Grundkörpers 12 ist, oder die sich mit anderen Worten in Richtung der Längsachse erstreckt. In Einbaulage des Druckbehälters in einem Fahrzeug verläuft die Wandung 24 im Wesentlichen vertikal.

Der Zusatzkörper 14 ist wie der Grundkörper 12 ein Hohlkörper und weist eine Basiswand 26 und eine Umfangswand 28 auf.

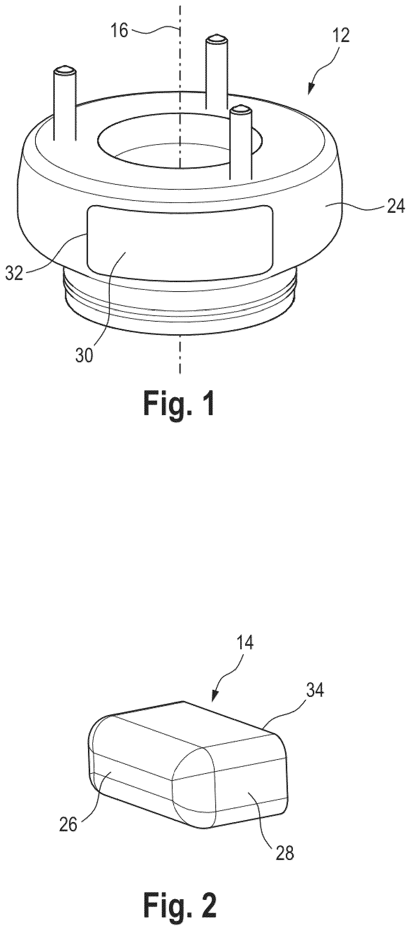

Weitere Einzelheiten des Grundkörpers 12 und des Zusatzkörpers 14 werden nachfolgend mit Bezug auf Fig. 1 und 2 beschrieben, anhand derer auch ein Verfahren zum Herstellen des Druckbehälters 10 in Fig. 3 beschrieben wird.

Fig. 1 zeigt den Grundkörper 12 in Alleinstellung. Der Grundkörper 12 wird bei einem Verfahren zum Herstellen des Druckbehälters 10 als Vorstufe des Druckbehälters 10 bereitgestellt. Der Grundkörper 12 wird dabei mit einer Öffnung 30, die einen Öffnungsrand 32 aufweist, in der Wandung 24 bereitgestellt. Die Öffnung 30 kann nachträglich in die Wandung 24 eingebracht worden sein, während der Grundkörper 12 zunächst mit einer geschlossenen Wandung 24, die die Öffnung 30 nicht enthält, bereitgestellt wurde.

Die Öffnung 30 ist im Wesentlichen rechteckförmig mit abgerundeten Ecken, wobei die rechteckförmige Gestalt der Öffnung 30 nur beispielhaft ist. Beispielsweise kann die Öffnung 30 auch kreisförmig sein.

Der Grundkörper 12 weist in dem in Fig. 1 gezeigten Ausgangszustand ein Anfangsinnenvolumen auf, das zu Beginn eines Entwicklungsprojektes nach bestimmten Vorgaben ausgelegt wurde. Im Ausgangszustand kann der Grundkörper 12 somit den Druckbehälter darstellen, der im Rahmen von Fahrversuchen dazu benutzt wird, das spätere endgültige Soll-Innenvolumen des Druckbehälters 10 zu ermitteln. Bei diesen Fahrversuchen ist die Öffnung 30 nicht vorhanden oder zumindest verschlossen. Mit dem erfindungsgemäßen Druckbehälter 10 können Fahrversuche auch iterativ durchgeführt werden, um Schritt für Schritt das endgültige Soll-Innenvolumen des Druckbehälters 10 zu bestimmen, ohne dass hierfür ein erhöhter Herstellungsaufwand für den Druckbehälter betrieben werden muss, wie sich aus der nachfolgenden Beschreibung ergibt.

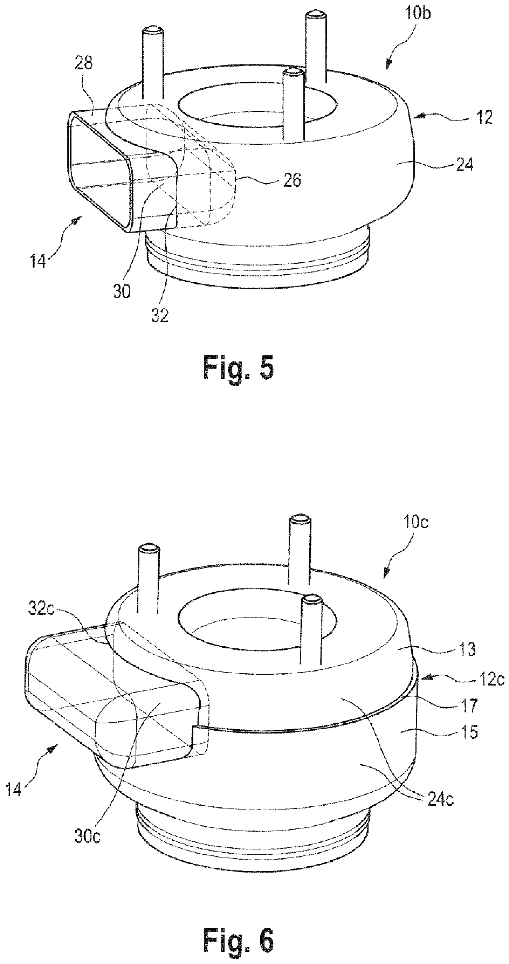

Im Rahmen der Herstellung des Druckbehälters 10 in Fig. 3 wird des Weiteren der Zusatzkörper 14 bereitgestellt, der in Fig. 2 in Alleinstellung gezeigt ist. Der Zusatzkörper 14 weist die Basiswand 26 und die Umfangswand 28 auf. Die Umfangswand 28 und damit der Zusatzkörper 14 ist auf der der Basiswand 26 gegenüberliegenden Seite 34 offen, wie in Fig. 5 zu sehen ist.

Der Zusatzkörper 14 weist in dem gezeigten Ausführungsbeispiel die Form eines einseitig offenen Quaders auf, dessen Abmessung und Kontur entsprechend an die Form und Abmessung der Öffnung 30 im Grundkörper 12 angepasst ist. In anderen Ausführungsbeispielen, in denen die Öffnung beispielsweise kreisförmig ist, weist der Zusatzkörper entsprechend eine kreisförmige Umfangswand 28 auf.

Um den Druckbehälter 10 herzustellen, wird der Zusatzkörper 14 mit dem Grundkörper 12 an der Öffnung 30 der Wandung 24 des Grundkörpers 12 derart gefügt, dass der Druckbehälter 10 mit dem gewünschten Endinnenvolumen bzw. Soll-Innenvolumen erhalten wird, das größer oder kleiner ist als das Anfangsinnenvolumen des Grundkörpers 12 gemäß Fig. 1.

Fig. 3 zeigt den Fall, dass der Druckbehälter 10 ein Endinnenvolumen bzw. Soll-Innenvolumen aufweisen soll, das aufgrund der durchgeführten Fahrversuche größer sein muss als das Anfangsinnenvolumen des Grundkörpers 12. Um dieses Endinnenvolumen zu erreichen, wird nun das durch den Zusatzkörper 14 bereitgestellte Zusatzvolumen genutzt. In diesem Fall wird der Zusatzkörper 14 mit seiner offenen Seite 34 an der Öffnung 30 der Wandung 24 des Grundkörpers 12 gefügt.

In dem in Fig. 3 gezeigten Ausführungsbeispiel ist der Zusatzkörper 14 als Einschub- bzw. Einsteckteil ausgebildet, wobei eine Kontur und Abmessung der Umfangswand 28 des Zusatzkörpers 14 zumindest annähernd an die Kontur und Abmessung des Öffnungsrandes 32 der Öffnung 30 der Wandung 24 des Grundkörpers 12 angepasst ist, wie bereits oben beschrieben wurde. Auf diese Weise lässt sich der Zusatzkörper 14 mit seiner offenen Seite 34 voran soweit in die Öffnung 30 des Grundkörpers 12 einschieben, bis das gewünschte Endinnenvolumen des Druckbehälters 10 erreicht ist. Durch die stufenlose Einschiebbarkeit des Zusatzkörpers 14 kann das gewünschte Endinnenvolumen des Druckbehälters 10 genau eingestellt werden. Sobald die für die Erreichung des gewünschten Endinnenvolumens des Druckbehälters 10 erforderliche Einschubtiefe des Zusatzkörpers 14 eingestellt ist, wird der Zusatzkörper durch Fügen der Umfangswand 28 des Zusatzkörpers 14 mit dem Öffnungsrand 32 der Öffnung 30 der Wandung 24 des Grundkörpers 12 gefügt. Die Fügelinie verläuft dabei entlang des Öffnungsrandes 32 der Öffnung 30. Durch die Anpassung von Kontur und Abmessung der Umfangswand 28 an die Kontur und Abmessung des Öffnungsrandes 32 sitzt der Zusatzkörper 14 formschlüssig in der Öffnung 30 des Grundkörpers 12, so dass beim Fügen keine größeren Spalte zu verschließen sind und damit die Dichtigkeit des Druckbehälters leichter gewährleistet werden kann.

Das Fügen erfolgt vorzugsweise durch Schweißen. Andere Fügeverfahren wie Kleben, Verpressen, Löten können jedoch ebenfalls angewandt werden. Das Fügen stellt außerdem die Enddichtigkeit des Verbunds aus Zusatzkörper 14 und Grundkörper 12 an der Öffnung 30 her.

Fig. 4 zeigt einen Druckbehälter 10a, der aus dem gleichen Grundkörper 12 in Fig. 1 und dem gleichen Zusatzkörper 14 in Fig. 2 wie der Druckbehälter 10 gebildet ist, und der lediglich den Unterschied zum Druckbehälter 10 aufweist, dass der Zusatzkörper 14 weiter in den Grundkörper 12 eingeschoben ist als bei dem Druckbehälter 10. Hierdurch ist das Endinnenvolumen des Druckbehälters 10a größer als das Anfangsinnenvolumen des Grundkörpers 12, jedoch kleiner als das Endinnenvolumen des Druckbehälters 10.

Während bei dem Druckbehälter 10 und dem Druckbehälter 10a der Zusatzkörper 14 mit der offenen Seite 34 voran in die Öffnung 30 des Grundkörpers 12 eingeschoben ist, um ein Endinnenvolumen des Druckbehälters 10 bzw. 10a zu erreichen, das größer ist als das Anfangsinnenvolumen des Grundkörpers 12, zeigt Fig. 5 eine Ausführungsvariante, bei dem wiederum mit dem gleichen Grundkörper 12 in Fig. 1 und dem gleichen Zusatzkörper 14 in Fig. 2 ein Druckbehälter 10b hergestellt werden kann, dessen Endinnenvolumen kleiner ist als das Anfangsinnenvolumen des Grundkörpers 12. Hierzu wird beim Verfahren zum Herstellen des Druckbehälters 10b der Zusatzkörper 14 mit seiner geschlossenen Basiswand 26 voran in die Öffnung 30 des Grundkörpers 12 eingeschoben, so dass der Innenraum des Zusatzkörpers 14 nicht mit dem Innenraum des Grundkörpers 12 kommuniziert. Das Ausgangsinnenvolumen des Grundkörpers 12 wird hierdurch um das Volumen des eingeschobenen Abschnitts des Zusatzkörpers 14 verringert.

Wenn der Zusatzkörper 14 mit der für die Einstellung des gewünschten Endinnenvolumens des Druckbehälters 10b erforderlichen Einschubtiefe in die Öffnung 30 des Grundkörpers 12 eingeschoben ist, wird der Zusatzkörper 14 mit dem Grundkörper an der Öffnung 30 gefügt, indem die Umfangswand 28 des Zusatzkörpers 14 mit dem Öffnungsrand 32 der Öffnung 30 der Wandung 24 des Grundkörpers 12 gefügt wird.

Bei dem Ausführungsbeispiel in Fig. 5 kann der von der Wandung 24 nach außen abstehende Teil des Zusatzkörpers 14 abgeschnitten werden, wenn dies aus Gründen des Bauraums erforderlich sein sollte, oder es kann beispielsweise von vornherein ein Zusatzkörper verwendet werden, der in Einschubrichtung eine geringere Länge aufweist.

Die Vorteile des erfindungsgemäßen Verfahrens zum Herstellen eines Druckbehälters und des Druckbehälters manifestieren sich anhand der Fig. 3 bis 5 besonders deutlich, da identische Bauteile, nämlich der Grundkörper 12 und der Zusatzkörper 14 in unveränderter Form verwendet werden können, um Druckbehälter 10, 10a und 10b mit unterschiedlichen Endinnenvolumina herzustellen, und dies mit denselben Werkzeugen, Betriebsmitteln und derselben Fertigungsanlage, was eine signifikante Kostenreduktion mit sich bringt.

Damit lassen sich mit gleichen Bauteilen auch verschiedene Druckbehälter fahrzeugmodellübergreifend ohne Mehraufwand herstellen (sogenanntes Family Concept).

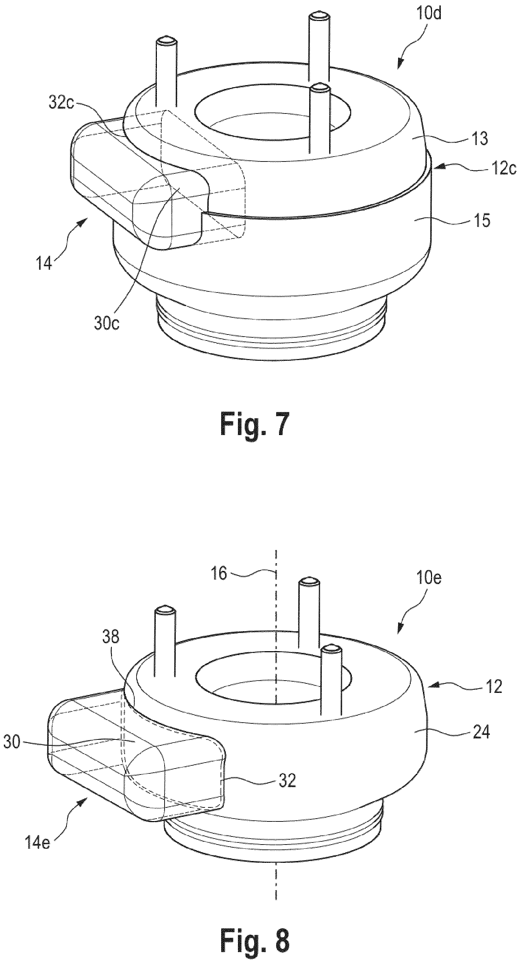

Das mit Bezug auf Fig. 1 bis 5 beschriebene Prinzip der Herstellung eines Druckbehälters lässt sich auch dann anwenden, wenn der Grundkörper mehrteilig aufgebaut ist, wie dies in Fig. 6 und 7 gezeigt ist. Fig. 6 zeigt einen Druckbehälter 10c, der aus einem Grundkörper 12c aufgebaut ist, der aus zwei Grundkörperteilen 13 und 15 gebildet ist.

Die beiden Grundkörperteile 13 und 15 sind entlang einer Verbindungsnaht 17 miteinander gefügt, beispielsweise durch Schweißen oder anderen gängigen Fügeverfahren. Beide Teile 13 und 15 weisen zusammen eine Wandung 24c auf, die eine Öffnung 30c aufweist, die auf beide Teile 13 und 15 verteilt ist. Entsprechend erstreckt sich der Öffnungsrand 32c der Öffnung 30c über beide Teile 13 und 15 des Grundkörpers 12b. Auch hier kann nun wieder der gleiche Zusatzkörper 14 wie bei den Druckbehältern 10 und 10a verwendet werden, der wie in Fig. 3 und 4 als Einsteckteil ausgebildet ist.

Fig. 7 zeigt einen Druckbehälter 10d, der aus dem gleichen Grundkörper 12c aufgebaut ist, wie der Druckbehälter 10c, mit dem Unterschied, dass der Zusatzkörper 14 weiter in die Öffnung 30c, wie bei dem Druckbehälter 10a in Fig. 4, eingeschoben ist.

Ohne dass dies in der Zeichnung dargestellt ist, erschließt sich dem Fachmann, dass auch die Ausführungsart in Fig. 5 bei dem Grundkörper 12c angewandt werden kann, wenn aus dem Grundkörper 12c ein Druckbehälter hergestellt werden soll, dessen Endinnenvolumen kleiner ist als das Anfangsinnenvolumen des Grundkörpers 12c.

Fig. 8 zeigt eine weitere Ausführungsform eines Druckbehälters 10e, der nach einem Verfahren hergestellt ist, das gegenüber den bisherigen Ausführungsformen abgewandelt ist.

Der Druckbehälter 10e weist den gleichen Grundkörper 12 in Fig. 1 auf wie die Druckbehälter 10 und 10a. Der Zusatzkörper 14e ist gegenüber den Zusatzkörpern 14 der bisherigen Ausführungsbeispiele nicht als Einsteck- bzw. Einschubteil ausgebildet, sondern der Zusatzkörper 14e ist an die Außenseite der Wandung 24 des Grundkörpers 12 an der Öffnung 30 angesetzt und ragt somit nicht in das Innere des Grundkörpers 12 hinein. Der Zusatzkörper 14e weist dazu einen Rand 38 auf, dessen Kontur an die Außenkontur der Wandung 24 angepasst ist, und, entsprechend des gezeigten Ausführungsbeispiels eines Grundkörpers 12 mit bezüglich der Längsachse kreisförmiger Wandung 24, einen von der Längsachse 16 aus gesehen in Umfangsrichtung um die Längsachse 16 konkav ausgebildet ist. Der Rand 38 ist hinsichtlich seiner Kontur und Abmessung außerdem an den Öffnungsrand 32 der Wandung 24 des Grundkörpers 12 angepasst, so dass der Rand 38 des Zusatzkörpers 14e im Wesentlichen bündig mit dem Rand 32 der Öffnung 30 an der Wandung 24 des Grundkörpers 12 anliegt. Der Rand 38, der die offene Seite des Zusatzkörpers 14e umrandet, wird mit der Wandung 24 oder dem Öffnungsrand 32 gefügt.

Um bei dieser Ausführungsform das gewünschte Endinnenvolumen bzw. Soll-Innenvolumen des fertigen Druckbehälters 10e zu erreichen, wird der Zusatzkörper 14e mit einer vorbestimmten Länge und Breite, bzw. einem vorbestimmtem Innenvolumen bereitgestellt, das so bemessen ist, dass nach dem Fügen des Zusatzkörpers 14e der Druckbehälter 10e mit dem gewünschten Endinnenvolumen erhalten wird.

Hierzu kann ausgehend von dem Zusatzkörper 14 in Fig. 1 dieser beispielsweise auf eine für die Erreichung des gewünschten Endinnenvolumens des Druckbehälters 10e erforderliche Länge gekürzt werden.

Der Zusatzkörper 14e kann selbstverständlich auch mit den Grundkörpern 12c in Fig. 6 und 7 verwendet werden.

Die Zusatzkörper 14 und 14e sind vorzugsweise als Tiefziehteile gefertigt.

Aus den Darstellungen in Fig. 3 bis 8 ergibt sich außerdem, dass das beschriebene Herstellungsverfahren den Prozess der Innenlackierung des jeweiligen Druckbehälters 10 bis 10e nicht beeinträchtigt, weil überschüssiger Lack aus dem Inneren des jeweiligen Druckbehälters abfließen kann und sich nicht in Nischen verfängt und dort antrocknet.

Während in den gezeigten und oben beschriebenen Ausführungsbeispielen nur ein Zusatzkörper 14 bzw. 14e zur Herstellung eines Druckbehälters verwendet wird, ist es jedoch ebenso im Rahmen der Erfindung möglich, mehrere solcher Zusatzkörper an der Wandung 24 bzw. 24c verteilt anzuordnen, wobei dann eine entsprechende Anzahl von Öffnungen in der Wandung 24 bzw. 24c vorzusehen sind. Hierdurch kann ein Zusatzvolumen, insbesondere ein Mehrvolumen, auf mehrere Zusatzkörper verteilt werden, ohne dass der fertige Druckbehälter radial bezüglich der Längsachse 16 groß baut. Eine Mehrzahl von Zusatzkörpern eignen sich jedoch auch in dem Fall, dass ein Mindervolumen des Druckbehälters gegenüber dem Anfangsinnenvolumen des Grundkörpers erzielt werden muss.

Außerdem versteht es sich, dass das hierin beschriebene Verfahren zum Herstellen eines Druckbehälters nicht nur bei rotationssymmetrischen Grundkörpern einsetzbar ist, sondern auch bei bezüglich der Längsachse 16 nicht rotationssymmetrischen Grundkörpern.

## Patentansprüche

1. Verfahren zum Herstellen eines Druckbehälters (10; 10a; 10b; 10c; 10d; 10e) für ein Kraftfahrzeug, mit den Schritten:
Bereitstellen eines hohlen Grundkörpers (12; 12c) als Vorstufe des Druckbehälters (10; 10a; 10b; 10c; 10d; 10e), wobei der Grundkörper (12; 12c) ein Anfangsinnenvolumen aufweist, und wobei der Grundkörper (12; 12c) eine Wandung (24; 24c) aufweist, die sich vollumfänglich um eine Längsachse (16) des Grundkörpers (12; 12c) erstreckt, wobei die Wandung (24; 24c) eine Öffnung (30; 30c) aufweist, die einen Öffnungsrand (32; 32c) aufweist;
Bereitstellen eines hohlen Zusatzkörpers (14; 14e), der eine Basiswand (26) und eine Umfangswand (28) aufweist, wobei die Umfangswand (28) an einer der Basiswand (26) gegenüber liegenden Seite (34) offen ist;
Fügen des Zusatzkörpers (14; 14e) mit dem Grundkörper (12; 12c) an der Öffnung (30; 30c) der Wandung (24; 24c) des Grundkörpers (12; 12c) derart, dass der Druckbehälter (10; 10a; 10b; 10c; 10d; 10e) mit einem gewünschten Endinnenvolumen erhalten wird, das größer oder kleiner ist als das Anfangsinnenvolumen des Grundkörpers (12; 12c),
**dadurch gekennzeichnet, dass** der Grundkörper (12; 12c) mit einer Mehrzahl von verteilt angeordneten Öffnungen (30; 30c) in der Wandung (24; 24c) bereitgestellt wird, und wobei eine Mehrzahl von Zusatzkörpern (14; 14e) bereitgestellt werden, die zum Erhalten des Druckbehälters (10; 10a; 10b; 10c; 10d; 10e) mit dem gewünschten Endinnenvolumen an den Öffnungen (30; 30c) mit dem Grundkörper (12; 12c) gefügt werden.

2. Verfahren nach Anspruch 1, wobei der jeweilige Zusatzkörper (14; 14e) so bereitgestellt wird, dass eine Kontur und Abmessung der Umfangswand (24; 24c) des Zusatzkörpers (14; 14e) zumindest annähernd an eine Kontur und Abmessung des Öffnungsrandes (32; 32c) der jeweiligen Öffnung (30; 30c) der Wandung (24; 24c) des Grundkörpers (12; 12c) angepasst ist.

3. Verfahren nach Anspruch 1 oder 2, wobei der jeweilige Zusatzkörper (14) vor dem Fügen mit der offenen Seite (34) voran teilweise in die jeweilige Öffnung (32; 32c) eingeschoben wird, so dass das gewünschte Endinnenvolumen des Druckbehälters (10; 10a; 10c; 10d) erhalten wird.

4. Verfahren nach Anspruch 1 oder 2, wobei der jeweilige Zusatzkörper (14) vor dem Fügen mit der Basiswand (26) voran zumindest teilweise in die jeweilige Öffnung (30) eingeschoben wird, so dass das gewünschte Endinnenvolumen des Druckbehälters (10b) erhalten wird.

5. Verfahren nach Anspruch 3 oder 4, wobei das Fügen des jeweiligen Zusatzkörpers (14) ein Fügen der Umfangswand (24; 24c) des Zusatzkörpers (14) mit dem Öffnungsrand (32; 32c) der jeweiligen Öffnung (30; 30c) der Wandung (24; 24c) aufweist.

6. Verfahren nach Anspruch 1 oder 2, wobei der jeweilige Zusatzkörper (14e) an seiner offenen Seite einen Rand (38) aufweist, der Zusatzkörper (14e) vor dem Fügen mit dem Rand (38) um die jeweilige Öffnung (30) der Wandung (24) des Grundkörpers (12) an diesen angesetzt wird und der Rand (38) der offenen Seite des Zusatzkörpers (14e) mit der Wandung (24) oder dem Öffnungsrand (32) der Öffnung (30) gefügt wird.

7. Verfahren nach Anspruch 6, wobei der jeweilige Zusatzkörper (14e) mit einem vorbestimmten Innenvolumen des Zusatzkörpers (14e) bereitgestellt wird, das so bemessen ist, dass nach dem Fügen des jeweiligen Zusatzkörpers (14e) der Druckbehälter (10e) mit dem gewünschten Endinnenvolumen erhalten wird.

8. Verfahren nach einem der Ansprüche 1 bis 7, wobei das Fügen des jeweiligen Zusatzkörpers (14; 14e) Schweißen, Kleben, Verpressen und/oder Löten aufweist.

9. Verfahren nach einem der Ansprüche 1 bis 8, wobei der jeweilige Zusatzkörper (14; 14e) als Tiefziehteil bereitgestellt wird.

10. Druckbehälter für ein Kraftfahrzeug, mit einem hohlen Grundkörper (12; 12c), wobei der Grundkörper (12; 12c) ein Innenvolumen aufweist, und wobei der Grundkörper (12; 12c) eine Wandung (24; 24c) aufweist, die sich vollumfänglich um eine Längsachse (16) des Grundkörpers (12; 12c) erstreckt, wobei die Wandung (24; 24c) eine Öffnung (30; 30c) aufweist, die einen Öffnungsrand (32; 32c) aufweist, mit einem hohlen Zusatzkörper (14; 14e), der eine Basiswand (26) und eine Umfangswand (28) aufweist, wobei die Umfangswand (28) an einer der Basiswand (26) gegenüber liegenden Seite offen (34) ist, und wobei der Zusatzkörper (14; 14e) mit dem Grundkörper (12; 12c) an der Öffnung (30; 30c) der Wandung (24; 24c) des Grundkörpers (12; 12c) gefügt ist, wodurch der Druckbehälter (10; 10a; 10b; 10c; 10d; 10e) ein Innenvolumen aufweist, das größer oder kleiner ist als das Innenvolumen des Grundkörpers (12; 12c),
**dadurch gekennzeichnet, dass** der Grundkörper (12; 12c) eine Mehrzahl von verteilt angeordneten Öffnungen (30; 30c) in der Wandung (24; 24c) aufweist, und wobei eine Mehrzahl von Zusatzkörpern (14; 14e) an den Öffnungen (30; 30c) der Wandung (24; 24c) mit dem Grundkörper (12; 12c) gefügt sind.

11. Druckbehälter nach Anspruch 10, wobei eine Kontur und Abmessung der Umfangswand (28) des jeweiligen Zusatzkörpers (14; 14e) zumindest annähernd an eine Kontur und Abmessung des Öffnungsrandes (32; 32c) der jeweiligen Öffnung (30; 30c) der Wandung (24; 24c) des Grundkörpers (12; 12c) angepasst ist.

12. Druckbehälter nach Anspruch 10 oder 11, wobei der jeweilige Zusatzkörper (14) mit der offenen Seite (34) voran teilweise in die jeweilige Öffnung (30; 30c) der Wandung (24; 24c) des Grundkörpers (12; 12c) eingeschoben ist.

13. Druckbehälter nach Anspruch 10 oder 11, wobei der jeweilige Zusatzkörper (14) mit der Basiswand (26) voran zumindest teilweise in die jeweilige Öffnung (30; 30c) eingeschoben ist.

14. Druckbehälter nach Anspruch 10 oder 11, wobei der jeweilige Zusatzkörper (14e) an seiner offenen Seite einen Rand (38) aufweist und der Zusatzkörper (14e) mit dem Rand (38) um die jeweilige Öffnung (30) der Wandung (24) des Grundkörpers (12) an diesen angesetzt ist und der Rand (38) der offenen Seite des Zusatzkörpers (14e) mit der Wandung (24) oder dem Öffnungsrand (32) der Öffnung (30) gefügt ist.

15. Druckbehälter nach einem der Ansprüche 10 bis 14, wobei der Druckbehälter (10; 10a; 10b; 10c; 10d; 10e) ein Luftfedertopf einer Luftfederung ist.
